Europäisches Patentamt

European Patent Office

Office européen des brevets

(19)

(11) Numéro de publication: **0 206 926
B1**

# (12) FASCICULE DE BREVET EUROPEEN

(45) Date de publication du fascicule du brevet:
23.08.89

(21) Numéro de dépôt: 86401317.2

(22) Date de dépôt: 17.06.86

(51) Int. Cl.⁴: **H01B 3/44,** H01G 4/18

(54) Matériaux diélectriques à base de polymères et à permittivité diélectrique élevée.

(30) Priorité: 21.06.85 FR 8509500

(43) Date de publication de la demande:
30.12.86 Bulletin 86/52

(45) Mention de la délivrance du brevet:
23.08.89 Bulletin 89/34

(84) Etats contractants désignés:
BE DE GB NL

(56) Documents cités:
WO-A-84/03250
FR-A- 2 311 803

CHEMICAL ABSTRACTS,
vol. 99, no. 18, 31 octobre 1983, page 24, résumé
no. 140761t, Columbus, Ohio, US; N. KOIZUMI et al.:
"Dielectric behavior of copolymers of vinylidene
fluoride and trifluoroethylene", & PROC. IUPAC,
I.U.P.A.C., MACROMOL. SYMP., 28th 1982, 423 000
CHEMICAL ABSTRACTS,
vol. 99, no. 26, 26 décembre 1983, page 23, résumé
no. 213226j, Columbus, Ohio, US; K. KIMURA et al.:
"Ferroelectric properties of vinylidene
fluoride-trifluoroethylene copolymer thin films", &
APPL. PHYS. LETT. 1983, 43(9), 834-6th 1982, 423 000

(73) Titulaire: THOMSON-CSF, 51, Esplanade du Général de
Gaulle, F-92800 Puteaux(FR)

(72) Inventeur: Broussoux, Dominique, THOMSON-CSF
SCPI 19, avenue de Messine, F-75008 Paris(FR)
Inventeur: Micheron, François, THOMSON-CSF
SCPI 19, avenue de Messine, F-75008 Paris(FR)

(74) Mandataire: Lepercque, Jean et al, THOMSON-CSF
SCPI, F-92045 PARIS LA DEFENSE CEDEX 67(FR)

## Description

La présente invention concerne les matériaux diélectriques formés à partir de polymères et qui présentent une permittivité diélectrique élevée.

Un matériau diélectrique souvent employé pour la fabrication de condensateurs est le polyfluorure de vinylidène (PVF$_2$) qui possède d'intéressantes propriétés diélectriques. Il peut être obtenu sous forme de films minces. Toutefois, du fait de difficultés technologiques, il est difficile d'obtenir des films d'épaisseur inférieure à 5 mm. Ceci impose des limitations pour la capacité volumique des condensateurs en PVF$_2$ puisque cette capacité est inversement proportionnelle au carré de l'épaisseur du diélectrique. On a donc cherché à améliorer, par différents traitements, les valeurs de permittivité diélectrique du PVF$_2$ pour des gammes de températures et de fréquences aussi étendues que possible. On cherche aussi à ce que la gamme de températures d'utilisation optimale se rapproche de température ambiante.

L'étirement mécanique uniaxial ou biaxal permet d'accroître la valeur de la permittivité ou constante diélectrique d'environ 20%. La constante diélectrique relative passe alors pour le PVF$_2$ de 10 à 12. L'étirement induit par laminage permet d'obtenir des valeurs comprises entre 13 et 15.

Une autre solution consiste à mélanger le PVF$_2$ avec des poudres ferroélectriques à constantes diélectriques élevées (comprises entre 1000 et 2000). Cette technique, apparue comme un moyen simple et efficace d'augmenter la valeur de la constante eu diélectrique jusqu'aux environs de 40 ou 50, a l'inconvénient majeur d'interdire définitivement l'obtention de films d'épaisseur inférieure à 50 μm.

Une autre possibilité consiste à utiliser les copolymères plutôt que les homopolymères, par exemple le copolymère de fluorure de vinylidène et de trifluoroéthylène noté P(VF$_2$-TrFE) ou encore P(VF$_2$-VF$_3$). Des propriétés diélectriques d'un tel copolymère sont décrites dans les articles CHEMICAL ABSTRACTS, vol. 99, no. 18, 31 octobre 1983, page 24, résumé no. 140761t, Columbus, Ohio, US; N. KOIZUMI et al.: "Dielectric behavior of copolymers of vinylidene fluoride and trifluoroethylene", et CHEMICAL ABSTRACTS, vol. 99, no. 26, 26 décembre 1983, page 23, résumé no. 213226j, Columbus, Ohio, US; K. KIMURA et al.: "Ferroelectric properties of vinylidene fluoride-trifluoroethylene copolymer thin films". Ce copolymère a la particularité de présenter une transition de phase de type ferroélectrique à une température supérieure à la température ambiante et qui est fonction du rapport VF$_2$/VF$_3$. Néanmoins, le domaine de températures où la constante diélectrique est élevée (er entre 40 et 50) est limité.

Plus récemment sont apparus des terpolymères, par exemple le terpolymère de fluorure de vinylidène, de trifluoroéthylène et d'hexafluoropropène noté P(VF$_2$-TrFE-HFP) ou le terpolymère de fluorure de vinylidène, de tifluoroéthylène et de trifluoro-chloroéthylène noté P(VF$_2$-TrFE-TrFClE). Ces terpolymères présentent encore un caractère ferroélectrique mais les transitions à la température de Curie sont diffuses. Il en résulte que le domaine des températures pour lequel le matériau possède une constante diélectrique élevée est élargie par rapport à celui des copolymères, mais encore insuffisamment.

Afin de pallier ces inconvénients, l'invention propose des alliages de polymères ferroélectriques à températures de Curie différentes, ces alliages permettant d'optimiser les propriétés diélectriques sur une gamme de températures et de fréquences étendue. Ces alliages peuvent être réalisés à base de copolymères, à base d'un homopolymère et d'un ou plusieurs copolymères ou encore à base terpolymères.

L'invention a donc pour objet un matériau diélectrique à constante diélectrique élevée à base de polymères ferroélectriques de type copolymères et terpolymères de fluorure de vinylidène, caractérisé en ce qu'il est constitué d'un alliage de polymères ferroélectriques à températures de Curie différentes.

Les polymères ferroélectriques peuvent être des copolymères de fluorure de vinylidène et de trifluoroéthylène P(VF$_2$-VF$_3$). L'alliage peut comporter deux ou trois copolymères de ce type.

L'alliage peut également être réalisé à partir d'un homopolymère tel le PVF$_2$ et d'un copolymère tel le P(VF$_2$-VF$_3$).

Les polymères ferroélectriques peuvent être des terpolymères ce qui a l'avantage d'agrandir la zone à constante diélectrique élevée lorsque la température varie.

Les alliages peuvent être obtenus par mélange de deux terpolymères ou par mélange d'un terpolymère avec un copolymère.

L'invention sera mieux comprise et d'autres avantages apparaîtront au moyen de la description qui va suivre et des figures annexées parmi lesquelles:

- la figure 1 est un diagramme se rapportant à différents polymères de l'art connu,
- les figures 2 et 3 sont des diagrammes représentant l'évolution de la constante diélectrique relative en fonction de la température pour des matériaux selon l'invention,
la figure 4 est un diagramme représentant le flux de chaleur exothermique pour un matériau selon l'invention,
les figures 5 et 7 sont des diagrammes représentant l'évolution de la constante diélectrique avec la température pour des matériaux selon l'invention,
la figure 6 est un diagramme illustrant la variation de la constante diélectrique avec la température pour des terpolymères.

Dans ce qui suit, le terme polymère sera compris au sens large, c'est-à-dire englobant les copolymères et les terpolymères.

Les différents alliages seront réalisés par malaxage en phase fondue des différents composants sur un mélangeur à rouleaux chauffants pour une température d'environ 200°C. Les mélanges sont ensuite pressés sous forme de films minces de 100 à 120 µm d'épaisseur par compression à une température d'environ 180°C et refroidis par trempe dans l'eau afin de limiter la cristallisation. Puis les échantillons sont recouverts de métallisations, par exemple en aluminium, sur leurs faces principales afin de pouvoir mesurer leur constante diélectrique εr et leur facteur de perte tgδ. Les mesures seront effectuées pour une fréquence de 100 Hz et sur une gamme de température variant de -10°C à 140°C.

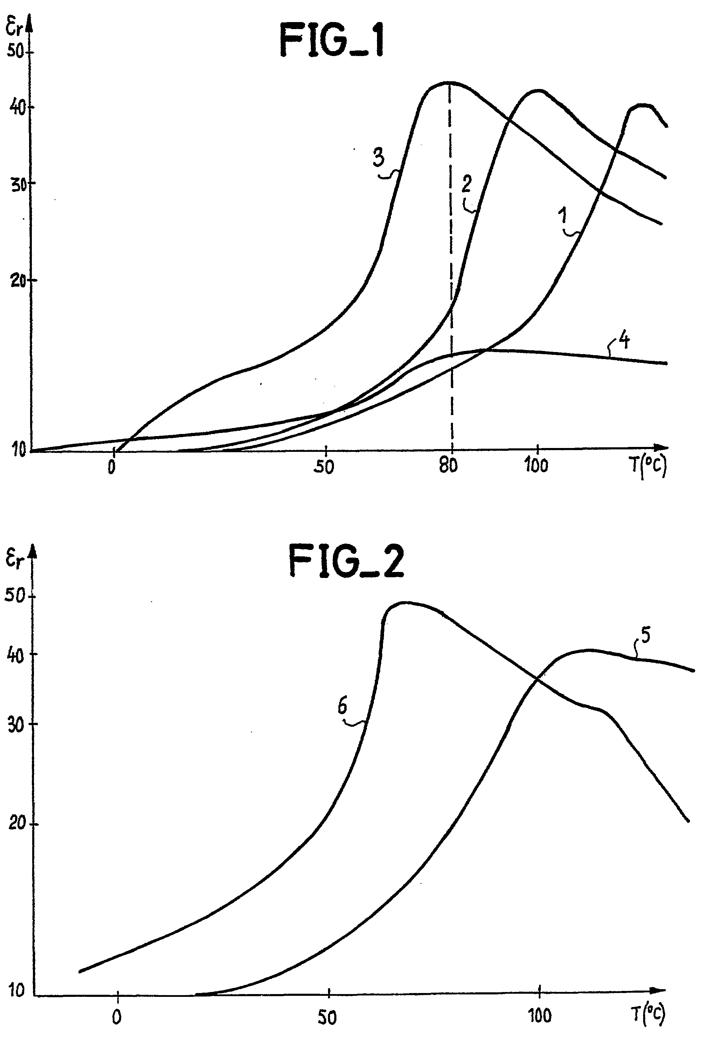

La figure 1 est un diagramme montrant l'évolution de la constante diélectrique εr en fonction de la température exprimée en degrés Celsius pour différents polymères de l'art connu. Il s'agit de copolymères de fluorure de vinylidène et de trifluoréthylène soit P(VF2-VF3) pour différentes compositions. La courbe 1 se rapporte à un copolymère noté 70/30, c'est-à-dire où la proportion de fluorure de vinylidène intervient pour 70 % en proportion molaire de constituants et le trifluoroéthylène 30 %. La courbe 2 se rapporte au même type de copolymère mais pour une proportion 60/40. De même, la courbe 3 se rapporte à une composition de proportion 50/50. Comme on le distingue très bien sur ce diagramme, ces copolymères présentent une transition de phase de type ferroélectrique à une température supérieure à la température ambiante et qui est fonction des proportions de ses constituants. Cette transition donne lieu à un maximum de la constante diélectrique εr qui est relativement élevée (autour de 40). Cette transition s'accompagne d'un changement de structure cristalline de la phase polaire à la phase non polaire. On admettra que le maximum de constante diélectrique correspond à la temperature de Curie.

On constate, d'après le diagramme de la figure 1, que le maximum de constante diélectrique se situe à une température relativement élevée (80°C pour la composition 50/50) et que ce maximum n'existe que pour une gamme de températures assez restreinte. La constante diélectrique diminue rapidement lorsque la température passe de la température de Curie à la température ambiante. Par exemple, la composition 60/40 passe d'environ 42 pour 100°C à environ 10 pour 20°C

A titre de comparaison, la courbe 4 représente la variation de εr en fonction de la température dans le cas du polyfluorure de vinylidène. On constate donc qu'il est possible d'accroître sensiblement la constante diélectrique grâce aux copolymères mais pour des températures élevées et pour des gammes de températures restreintes.

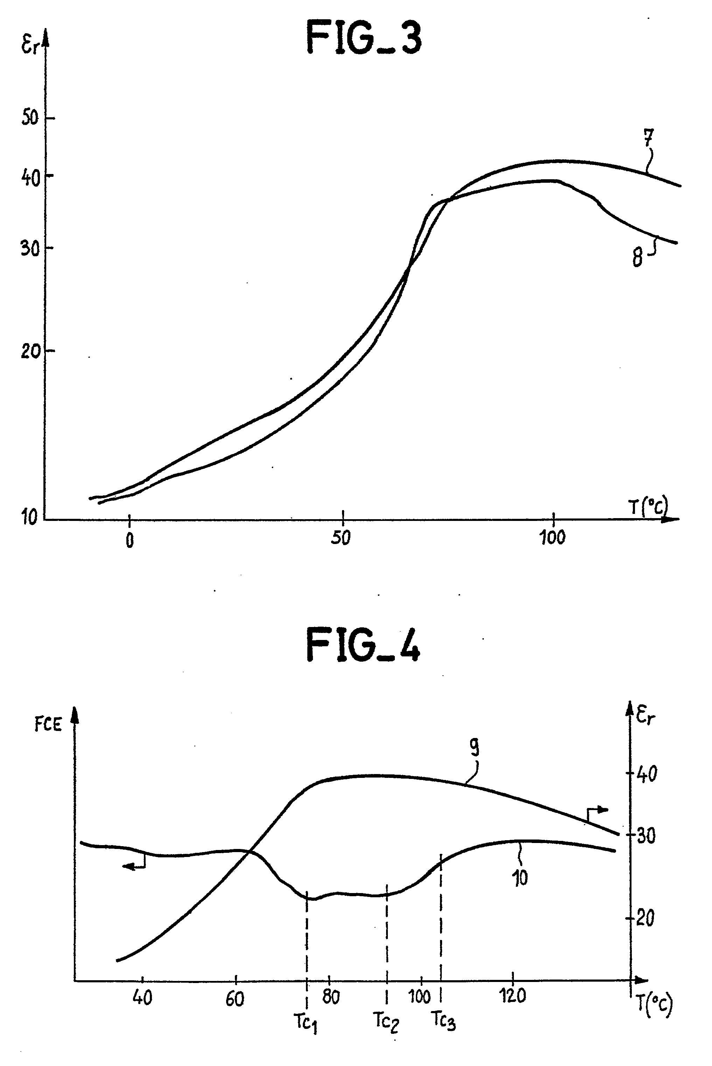

La figure 2 est un diagramme représentant la variation de la constante diélectrique εr avec la température pour des alliages selon l'invention. Il s'agit d'alliages entre des copolymères de fluorure de vinylidène et de trifluoroéthylène de concentration différentes. L'alliage A, correspondant à la courbe 5 , contient 50% en poids d'une composition 60/40 et 50% d'une composition 70/30. Cet alliage présente un plateau dans le comportement diélectrique avec εr de l'ordre de 40 à partir de 110°C alors que cette valeur n'est que de 10 à 25°C. L'amplitude du plateau ne varie que de quelques unités dans une gamme de températures d'une quarantaine de degrés. C'est une caractéristique intéressante bien que le plateau se présente à des températures relativement élevées.

L'alliage B, correspondant à la courbe 6, contient 70 % en poids d'une composition 50/50 et 30 % d'une composition 60/40. Cet alliage présente, autour de 70°C, un maximum de 45 pour εr. La constante diminue ensuite jusqu'à 30 pour une température de l'ordre de 120°C. La constante diélectrique maximale est élevée pour une température moyenne mais le plateau est encore assez étroit.

Pour ces alliages, le facteur de perte est inférieur à 0,03 jusqu'à 90°C.

La figure 3 est un diagramme représentant la variation de la constante diélectrique εr avec la température pour d'autres alliages selon l'invention. Il s'agit d'alliages réalisés à partir de trois copolymères de fluorure de vinylidène et de trifluorure d'éthylène de compositions 50/50, 60/40 et 70/30 pris en proportions différentes.

L'alliage C, correspondant à la courbe 7, présente une proportion en poids égale pour les trois compositions. L'alliage D, correspondant à la courbe 8 présente une proportion en poids de 45 % pour la composition 50/50, 35% pour la composition 60/40 et 20 % pour la composition 70/30. On note, pour les deux mélanges, la présence d'un plateau débutant aux environs de la température de Curie de la composition 50/50 soit 75°C. Pour l'alliage C, le plateau a une valeur assez constante (εr entre 35 et 40) pour une large gamme de températures (entre 75 et 140°C). C'est le faible pourcentage de la composition 70/30 dans l'alliage D (voir la courbe 8) qui entraîne une baisse de la constante diélectrique pour les températures supérieures à 105°C.

Pour ce type d'alliages, les pertes diélectriques sont inférieures à 0,04 jusqu'à 110°C.

La figure 4 est un diagramme représentant le flux de chaleur exothermique FCE pour l'alliage C. La courbe 9 représente la variation de constante diélectrique εr en fonction de la température. Elle correspond à la courbe 7 de la figure 3. La courbe 10 représente le flux de chaleur exothermique de cet alliage en fonction de la température. La mesure de ce flux de chaleur a été effectuée par analyse thermique différentielle ou DSC d'après la terminologie anglo-saxonne (Différential Scanning Calorimetry). La courbe 10 présente, pour la gamme de température correspondant au plateau de la courbe 9, un creux où l'on peut relever plusieurs températures significatives. On relève ainsi les trois températures $Tc_1$, $Tc_2$ et $Tc_3$. Les deux premières sont bien visibles sur la courbe 10 puisqu'elles correspondent à des minimums de flux de chaleur. La troisième correspond à un point d'inflexion de la courbe 10. L'intérêt de cette courbe est qu'elle illustre bien le fait que le mélange de plusieurs copolymères ferroélectriques à températures de Curie différents donne un alliage dont la transition de Curie est une combinaison des différentes transitions de Curie. On remarque l'étalement de la transition comprise entre $Tc_1$ (environ 75°C) et $Tc_3$ (environ 105°C). $Tc_1$ correspond à la température de Curie de la composition 50/50 et $Tc_3$ à la température de Curie de la composition 70/30. $Tc_2$ correspond à la température de Curie de la composition 60/40. On peut prévoir ainsi que la largeur du plateau à constante diélectrique sensiblement constante avec la température dépendra de la différence plus ou moins grande existant entre les températures de Curie des différentes compositions. Pour que le plateau se rapproche de la température ambiante, il faudra donc que la température de Curie de l'un des constituants s'en rapproche.

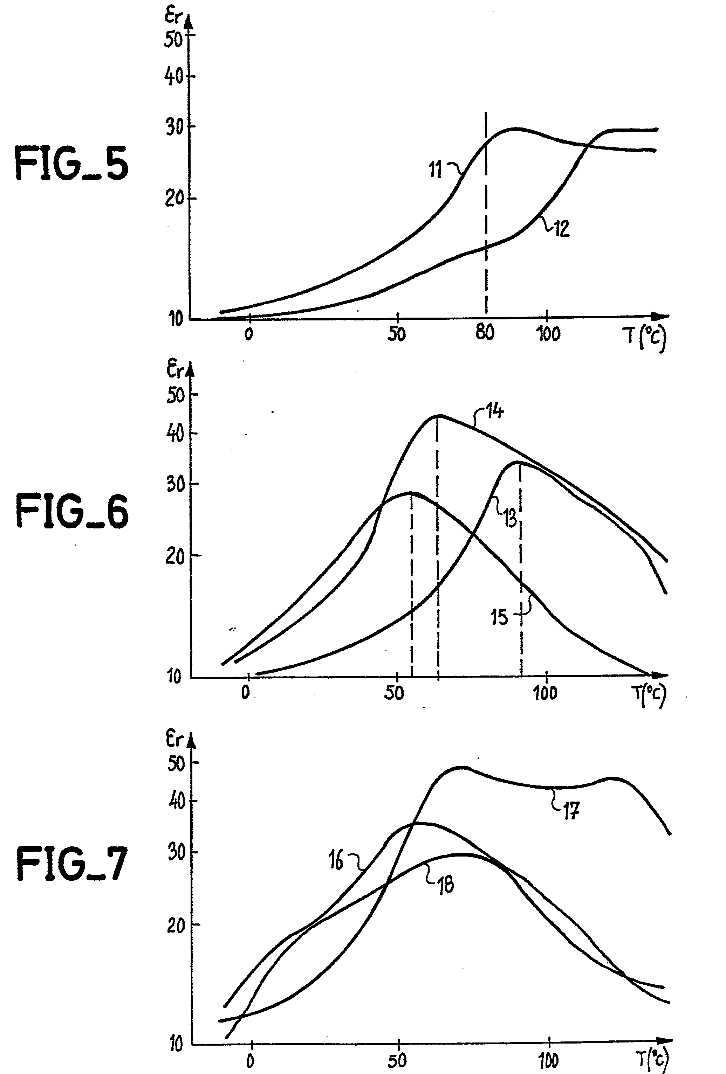

La figure 5 est un diagramme représentant la variation de la constante diélectrique $\varepsilon r$ avec la température pour d'autres alliages selon l'invention. Il s'agit d'alliages réalisés à partir de l'homopolymère PVF$_2$ et de copolymères de fluorure de vinylidène et de trifluoroéthylène. On peut représenter ces alliages par la notation : PVF$_2$ + P(VF$_2$/VF$_3$). Le type de copolymère (60/40 ou 70/30 par exemple) employé dans le mélange est déterminant pour le positionnement en température du plateau et pour la valeur de $\varepsilon r$ sur ce plateau. Ainsi sur la figure 5, le maximum de constante diélectrique ($\varepsilon r \approx 30$) est observé à partir de 80°C pour l'alliage E contenant 40% en poids de PVF$_2$ pour 60 % d'un copolymère 60/40. L'alliage E est représenté à la figure 5 par la courbe 11.

L'alliage F composé de 60 % en poids de PVF$_2$ et de 40% d'un copolymère 70/30 présente un maxima de constante diélectrique (environ 30) à partir de 110°C (voir la courbe12).

La diffraction de rayons X sur ces mélanges ne montre pas de cristallisation en phase β du PVF$_2$ mais une cristallisation en phase α, phase thermodynamiquement la plus stable.

La figure 6 est un diagramme représentant la variation de la constante électrique $\varepsilon r$ avec la température dans le cas de terpolymères. La courbe 13 est relative à un terpolymère T$_1$ de trifluoroéthylène, de fluorure de vinylidène et d'hexafluoropropène HFP que l'on notera P(VF$_3$ - VF$_2$ - HFP) et dont les proportions en moles dans le mélange sont respectivement 35, 60 et 5 %. Les courbes 14 et 15 sont relatives à des terpolymères (respectivement T$_2$ et T$_3$) de trifluoroéthylène, de fluorure de vinylidène et de trifluorochloroéthylène que l'on notera P(VF$_3$ - VF$_2$ - TrFClE). Pour la courbe 14, les proportions en moles des parties dans le mélange sont respectivement de 35, 60 et 5 %. Pour la courbe 15, les proportions en moles sont respectivement de 35, 55 et 10 %. On constate que pour ces terpolymères, les maximums de $\varepsilon r$ correspondent à des températures plus basses que pour les copolymères de la figure 1 et pour des valeurs de $\varepsilon r$ de même ordre de grandeur. On constate malheureusement l'absence de plateau comme pour les copolymères.

La figure 7 est un diagramme représentant la variation de la constante diélectrique $\varepsilon r$ avec la température dans le cas d'alliages de terpolymères entre eux ou avec un copolymère. La courbe 16 se rapport à un alliage G formé de 30 % en poids de T$_1$ et de 70% de T$_3$. L'alliage G présente un maximum de constante diélectrique ($\varepsilon r$ = 35) autour de 55°C à la température de Curie observée sur le terpolymère T$_3$ seul. On notera cependant la valeur élevée de $\varepsilon r$ (environ 20) pour la température de 20°C.

L'alliage H est formé de 30% en poids de T$_1$ et de 70 % de T$_2$ et correspond à la courbe 17. Cette courbe présente un plateau étendu en température (entre 60 et 130°C), de valeur élevée et relativement constante ($\varepsilon r$ de 45 à 50). Dans ces conditions, cet alliage est particulièrement intéressant.

L'alliage I est formé de 70 % en poids de terpolymère T$_3$ et de 30 % de copolymère VF$_2$ - VF$_3$ de proportions 60/40 (60 % en poids de VF$_2$ pour 40 % en poids de VF$_3$). Cette alliage correspond à la courbe 18. Cette courbe ne présente pas de plateau étendu mais l'alliage I permet l'obtention d'un matériau de constante diélectrique comprise entre 20 et 30 pour une gamme de températures s'étalant de 20 à 100°C et dont le maximum se situe autour de 80°C.

La présente invention ne se limite pas aux exemples cités plus haut. Elle s'applique à tous les alliages de polymères ferroélectriques.

D'autre part, il entre dans le cadre de l'invention d'utiliser ces matériaux pour d'autres applications. Par polarisation contrôlée, ils peuvent acquérir des propriétés piézoélectriques ou pyroélectriques caractéristiques des ferroélectriques à transistions diffuses.

**Revendications**

1. Matériau diélectrique à constante diélectrique élevée à base de polymères ferroélectriques de type copolymères et terpolymères de fluorure de vinylidène, caractérisé en ce qu'il est constitué d'un alliage de polymères ferroélectriques à températures de Curie différentes.

2. Matériau diélectrique selon la revendication 1, caractérisé en ce que lesdits polymères ferroélectriques sont des copolymères de fluorure de vinylidène et de trifluoroéthylène.

3. Matériau diélectrique selon la revendication 2, caractérisé en ce que l'alliage est constitué par 50% en poids d'un copolymère comprenant 60% en proportion molaire de fluorure de vinylidène pour 40% de trifluoroéthylène et par 50% d'un copolymère comprenant 70% en proportion molaire de fluorure de vinylidène pour 30% de trifluoroéthylène.

4. Matériau diélectrique selon la revendication 2, caractérisé en ce que l'alliage est constitué par 30% en poids d'un copolymère comprenant 60% en proportion molaire de fluorure de vinylidène pour 40% de trifluoroéthylène et par 70% d'un copolymère comprenant 50% en proportion molaire de fluorure de vinylidène pour 50% de trifluoroéthylène.

5. Matériau diélectrique selon la revendication 2, caractérisé en ce que l'alliage est constitué par un tiers en poids d'un copolymère comprenant 50% en proportion molaire de fluorure de vinylidène pour 50% de trifluoroéthylène, par un tiers d'un copolymère comprenant 60% en proportion molaire de fluorure et vinylidène pour 40% de trifluoroéthylène et par un tiers d'un copolymère comprenant 70% en proportion molaire de fluorure de vinylidène pour 30% de trifluoroéthylène.

6. Matériau diélectrique selon la revendication 2, caractérisé en ce que l'alliage est constitué par 45% en poids d'un copolymère comprenant 50% en proportion molaire de fluorure de vinylidène pour 50% de trifluoroéthylène, par 35% d'un copolymère comprenant 60% en proportion molaire de fluorure et vinylidène pour 40% de trifluoroéthylène et par 20% d'un copolymère comprenant 70% en proportion molaire de fluorure de vinylidène pour 30% de trifluoroéthylène.

7. Matériau diélectrique selon la revendication 1, caractérisé en ce que lesdits polymères ferroélectriques sont le polyfluorure de vinylidène (PVF₂) et le copolymère de fluorure de vinylidène et de trifluoroéthylène.

8. Matériau diélectrique selon la revendication 7, caractérisé en ce que l'alliage est constitué par 40% en poids de PVF₂ pour 60% d'un copolymère comprenant 60% en proportion molaire de fluorure de vinylidène pour 40% de trifluoroéthylène.

9. Matériau diélectrique selon la revendication 7, caractérisé en ce que l'alliage est constitué par 60% en poids de PVF₂ pour 40% d'un copolymère comprenent 70% en proportion molaire de fluorure de vinylidène pour 30% de trifluoroéthylène.

10. Matériau diélectrique selon la revendication 1, caractérisé en ce que lesdits polymères ferroélectriques comprenant au moins un terpolymère.

11. Matériau diélectrique selon la revendication 10, caractérisé en ce que l'alliage est constitué par 30% en poids d'un terpolymère comprenant 35% en moles de trifluoroéthylène, 60% de fluorure de vinylidène et 5% d'hexafluoropropène et par 70% d'un terpolymère comprenant 35% en moles de trifluoroéthylène, 55% de fluorure de vinylidène et 10% de trifluorochloroéthylène.

12. Matériau diélectrique selon la revendication 10, caractérisé en ce que l'alliage est constitué par 30% en poids d'un terpolymère comprenant 35% en moles de trifluoroéthylène, 60% de fluorure de vinylidène et 5% d'hexafluoropropène et par 70% d'un terpolymère comprenant 35% en moles de trifluoroéthylène, 60% de fluorure de vinylidène et 5% de trifluorochloroéthylène.

13. Matériau diélectrique selon la revendication 10, caractérisé en ce que l'alliage est constitué par 70% en poids d'un terpolymère comprenant 35% en moles de trifluoroéthylène, 55% de fluorure de vinylidène et 10% de trifluorochloroéthylène et par 30% d'un copolymère comprenant 60% en proportion molaire de fluorure de vinylidène pour 40% de trifluoroéthylène.

**Patentansprüche**

1. Dielektrisches Material hoher Dielektrizitätskonstante auf der Basis von ferroelektrischen Polymeren vom Typ der Kopolymere und Terpolymere des Vinylidenfluorids, dadurch gekennzeichnet, daß es aus einer Legierung ferroelektrischer Polymere mit unterschiedlichen Curietemperaturen besteht.

2. Dielektrisches Material nach Anspruch 1, dadurch gekennzeichnet, daß die ferroelektrischen Polymere Kopolymere des Vinylidenfluorids und des Trifluorethylens sind.

3. Dielektrisches Material nach Anspruch 2, dadurch gekennzeichnet, daß die Legierung aus 50 Gew.% eines Kopolymers mit 60 Mol% Vinylidenfluorid und 40 Mol% Trifluoräthylen, und aus 50 Gew.% eines Kopolymers mit 70 Mol% Vinylidenfluorid und 30 Mol% Trifluoräthylen besteht.

4. Dielektrisches Material nach Anspruch 2, dadurch gekennzeichnet, daß die Legierung aus 30 Gew.% eines Kopolymers mit 60 Mol% Vinylidenfluorid und 40 Mol% Trifluoräthylen, und aus 70 Gew.% eines Kopolymers mit 50 Mol% Vinylidenfluorid und 50 Mol% Trifluoräthylen besteht.

5. Dielektrisches Material nach Anspruch 2, dadurch gekennzeichnet, daß die Legierung gewichtsmäßig zu einem Drittel aus einem Kopolymer mit 50 Mol% Vinylidenfluorid und 50 Mol% Trifluoräthylen, zu einem Drittel aus einem Kopolymer mit 60 Mol% Vinylidenfluorid und 40 Mol% Trifluoräthylen und zu einem Drittel aus einem Kopolymer mit 70 Mol% Vinylidenfluorid und 30 Mol% Trifluoräthylen besteht.

6. Dielektrisches Material nach Anspruch 2, dadurch gekennzeichnet, daß die Legierung gewichtsmäßig zu 45% aus einem Kopolymer mit 50 Mol% Vinylidenfluorid und 50 Mol% Trifluoräthylen, zu 35% aus einem Kopolymer mit 60 Mol% Vinylidenfluorid und 40 Mol% Trifluoräthylen und zu 20% aus einem Kopolymer mit 70 Mol% Vinylidenfluorid und 30 Mol% Trifluoräthylen besteht.

7. Dielektrisches Material nach Anspruch 1, dadurch gekennzeichnet, daß die ferroelektrischen Polymere das Vinylidenpolyfluorid (PVF₂) und das Kopolymer des Vinylidenfluorids und des Trifluoräthylens sind.

8. Dielektrisches Material nach Anspruch 7, dadurch gekennzeichnet, daß die Legierung in Gewichtsprozenten zu 40% aus PVF₂ und zu 60% aus einem Kopolymer mit 60 Mol% Vinylidenfluorid und 40 Mol% Trifluoräthylen besteht.

9. Dielektrisches Material nach Anspruch 7, dadurch gekennzeichnet, daß die Legierung in Gewichtsprozenten zu 60% aus PVF₂ und zu 40% aus einem Kopolymer mit 70 Mol% Vinylidenfluorid und 30 Mol% Trifluoräthylen besteht.

10. Dielektrisches Material nach Anspruch 1, dadurch gekennzeichnet, daß die ferroelektrischen Polymere mindestens ein Terpolymer aufweisen.

11. Dielektrisches Material nach Anspruch 10, dadurch gekennzeichnet, daß die Legierung gewichtsmäßig zu 30% aus einem Terpolymer mit 35 Mol% Trifluoräthylen, 60 Mol% Vinylidenfluorid und 5 Mol% Hexafluorpropen und zu 70% aus einem Terpolymer mit 35 Mol% Trifluoräthylen, 55 Mol% Vinylidenfluorid und 10 Mol% Trifluorchloräthylen besteht.

12. Dielektrisches Material nach Anspruch 10, dadurch gekennzeichnet, daß die Legierung gewichtsmäßig zu 30% aus einem Terpolymer mit 35 Mol% Trifluoräthylen, 60 Mol% Vinylidenfluorid und 5 Mol% Hexafluorpropen und zu 70% aus einem Terpolymer mit 35 Mol% Trifluoräthylen, 60 Mol% Vinylidenfluorid und 5 Mol% Trifluorchloräthylen besteht.

13. Dielektrisches Material nach Anspruch 10, dadurch gekennzeichnet, daß die Legierung gewichtsmäßig zu 70% aus einem Terpolymer mit 35 Mol% Trifluoräthylen, 55 Mol% Vinylidenfluorid und 10 Mol% Trifluorchloräthylen und zu 30% aus einem Copolymer mit 60 Mol% Vinylidenfluorid und 40 Mol% Trifluoräthylen besteht.

**Claims**

1. A dielectric material having a high dielectric constant, basically constituted of ferroelectric polymers of the vinylidene fluoride copolymeric and terpolymeric type, characterized in that it is constituted of an alloy of ferroelectric polymers having different Curie temperatures.

2. A dielectric material according to claim 1, characterized in that said ferroelectric polymers are copolymers of vinylidene fluoride and of trifluoroethylene.

3. A dielectric material according to claim 2, characterized in that the alloy is constituted by 50% by weight of a copolymer comprising 60 Mol% of vinylidene fluoride and 40 Mol% of trifluoroethylene, and by 50% by weight of a copolymer comprising 70 Mol% of vinylidene fluoride and 30 Mol% of trifluororethylene.

4. A dielectric material according to claim 2, characterized in that the alloy is constituted by 30% by weight of a copolymer comprising 60 Mol% of vinylidene fluoride and 40 Mol% of trifluoroethylene, and by 70% by weight of a copolymer comprising 50 Mol% of vinylidene fluoride and 50 Mol% of trifluororethylene.

5. A dielectric material according to claim 2, characterized in that the alloy is constituted by one third by weight of a copolymer comprising 50 Mol% of vinylidene fluoride and 50 Mol% of trifluoroethylene, by one third by weight of a copolymer comprising 60 Mol% of vinylidene fluoride and 40 Mol% of trifluororethylene, and by one third by weight of a copolymer comprising 70 Mol% of vinylidene fluoride and 30 Mol% of trifluoroethylene.

6. A dielectric material according to claim 2, characterized in that the alloy is constituted by 45% by weight of a copolymer comprising 50 Mol% of vinylidene fluoride and 50 Mol% of trifluoroethylene, by 35% by weight of a copolymer comprising 60 Mol% of vinylidene fluoride and 40 Mol% of trifluororethylene and by 20% by weight of a copolymer comprising 70 Mol% of vinylidene fluoride and 30 Mol% of trifluoroethylene.

7. A dielectric material according to claim 1, characterized in that the ferroelectric polymers are the polyfluoride of vinylidene (PVF$_2$) and the copolymer of vinylidene fluoride and of trifluoroethylene.

8. A dielectric material according to claim 7, characterized in that the alloy is constituted by 40% by weight of PVF$_2$ and by 60% of a copolymer comprising 60 Mol% of vinylidene fluoride and 40 Mol% of trifluoroethylene.

9. A dielectric material according to claim 7, characterized in that the alloy is constituted by 60% by weight of PVF$_2$ and by 40% of a copolymer comprising 70 Mol% of vinylidene fluoride and 30 Mol% of trifluoroethylene.

10. A dielectric material according to claim 1, characterized in that the ferroelectric polymers comprise at least one terpolymer.

11. A dielectric material according to claim 10, characterized in that the alloy is constituted by 30% by weight of a terpolymer comprising 35 Mol% of trifluoroethylene, 60 Mol% of vinylidene fluoride and 5 Mol% of hexafluoropropene, and by 70% by weight of a terpolymer comprising 35 Mol% of trifluoroethylene, 55 Mol% of vinylidene fluoride and 10 Mol% of trifluorochloroethylene.

12. A dielectric material according to claim 10, characterized in that the alloy is constituted by 30% by weight of a terpolymer comprising 35 Mol% of trifluoroethylene, 60 Mol% of vinylidene fluoride and 5 Mol% of hexafluoropropene, and by 75% by weight of a terpolymer comprising 35 Mol% of trifluoroethylene, 60 Mol% of vinylidene fluoride and 5 Mol% of trifluorochloroethylene.

13. A dielectric material according to claim 10, characterized in that the alloy is constituted by 70% by weight of a terpolymer comprising 35 Mol% of trifluoroethylene, 55 Mol% of vinylidene fluoride and 10 Mol% of hexafluoropropene, and by 30% by weight of a copolymer comprising 60 Mol% of vinylidene fluoride and 40 Mol% of trifluoroethylene.

FIG_1

FIG_2

# FIG_3

# FIG_4

EP 0 206 926 B1

FIG_5

FIG_6

FIG_7